# EUROPÄISCHE PATENTANMELDUNG

(11) **EP 2 194 069 A1**
(43) Veröffentlichungstag der Anmeldung: **09.06.2010**
(21) Anmeldenummer: 08021050.3
(22) Anmeldetag: 04.12.2008
(51) Int. Cl.: C08F 2/00, C08F 2/22, C08F 2/24

(54) **Copolymerisierbare Tenside**

(71) Anmelder: Cognis IP Management GmbH, 40589 Düsseldorf (DE)
(72) Erfinder: Klagge, Ronald, Dr., 40699 Erkrath (DE); Schliwka, Thomas, 51427 Bergisch Gladbach (DE); Held, Uwe, 42553 Velbert (DE); Mausberg, Thomas, 42781 Haan (DE); Hömberg, Katharina, 40723 Hilden (DE); Busch, Stefan, Dr., 40597 Düsseldorf (DE)
(74) Vertreter: Reinhardt, Jürgen

(57) **Zusammenfassung**

Vorgeschlagen wird ein Verfahren zur Herstellung von Polymeren durch Emulsionspolymerisation olefinisch ungesättigter Monomere, bei dem man als copolymeriserbare Emulgatoren Verbindungen der Formel (I) einsetzt, 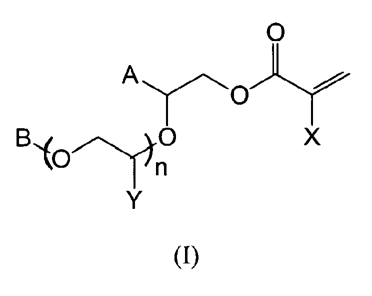 worin bedeuten
A
einen Alkylrest mit 3 bis 40 C-Atomen,
X und Y
unabhängig voneinander Wasserstoff- oder einen Methylrest,
B
eine Sulfat- oder Phosphatgruppe und
n
eine Zahl im Bereich von 0 bis 40.

## Beschreibung

### Gebiet der Erfindung

Die Erfindung liegt auf dem Polymersektor und betrifft ein Verfahren zur Emulsionspolymerisation unter Verwendung neuer copolymerisierbarer Emulgatoren. Sie betrifft darüber hinaus die Verwendung von olefinisch ungesättigten Verbindungen spezieller Struktur als Emulgatoren in der Emulsionspolymerisation.

### Stand der Technik

Bei der Emulsionspolymerisation handelt es sich um ein spezielles Verfahren der Polymerisation, bei dem gering wasserlösliche olefinisch ungesättigte Monomere mit Hilfe von Emulgatoren in Wasser emulgiert und unter Verwendung wasserlöslicher Initiatoren wie beispielsweise Kaliumperoxodisulfat oder Redoxinitiatoren polymerisiert werden. Anionische und/oder nicht-ionische Tenside sind hierbei die wesentliche Bestandteile. Über den Micellaufbau in der wässrigen Lösung gewährleisten sie den Prozess der Emulsionspolymerisation.

Copolymerisierbare Emulgatoren sind in der Industrie sehr gefragt, da sie in die wachsende Polymerkette vollständig oder teilweise eingebaut werden und dadurch beispielsweise die Migration freier Emulgatormoleküle im Endanwendungsprodukt herabsetzen. Copolymerisierbare Emulgatoren nehmen eine Mittelstellung zwischen Monomeren und herkömmlichen Emulgatoren ein. Hierbei müssen sie in Bezug auf ihre Reaktivität auf das verwendete Monomersystem abgestimmt sein und dürfen die Eigenschaften des entstehenden Polymers nicht negativ verändern. Gleichzeitig dürfen sie durch das Vorhandensein einer reaktiven Gruppe ihre emulgativen Eigenschaften nicht verlieren. Aufgrund dieser Kombination spezieller Eigenschaften besteht seitens der Industrie eine große Nachfrage an neuen copolymerisierberen Emulgatoren.

Die deutsche Offenlegungsschrift DE-A-10340081 beschreibt copolymerisierbare Tenside der Formel HOOC-CH=CH-COO-(BO)_{z}(PO)_{y}(EO)ₓR¹, in der R¹ für einen Alkylrest oder Alkylphenolrest mit 8 bis 24 Kohlenstoffatomen, BO für eine Butylenoxideinheit, PO für eine Propylenoxideinheit und EO für eine Ethylenoxideinheit steht und die Zahlen x, y und z unabhängig voneinander für 0 oder Zahlen von 1 bis 50 stehen, mit der Maßgabe, dass mindestens eine der Zahlen x, y und z von 0 verschieden ist, wobei die Carboxylgruppe der Verbindungen (I) teilweise oder ganz in neutralisierter Form vorliegen kann und die C=C-Doppelbindung cis- oder trans-konfiguriert sein kann.

### Beschreibung der Erfindung

Der vorliegenden Erfindung lag die Aufgabe zugrunde, Verbindungen bereitzustellen, die sich allein oder in Abmischung mit anderen Verbindungen als copolymerisierbare Emulgatoren für die Emulsionspolymerisation eignen.

Bei der Verwendung als Emulgatoren für die Emulsionspolymerisation sollten diese insbesondere bewirken, daß nur eine geringe Koagulatbildung erfolgt. Weiterhin sollten diese copolymerisierbaren Emulgatoren in wässriger Angebotsform gießbar bzw. pumpbar sein.

Schließlich sollten durch die Verwendung als Emulgatoren bei der Emulsionspolymerisation Latices zugänglich sind, die gegenüber solchen Latices, die mit vergleichbaren nicht-copolymerisierbaren Emulgatoren hergestellt werden, verbesserte Eigenschaften in Bezug auf Elektrolytbeständigkeit, Alkaliresistenz und/oder Viskosität aufweisen.

Gegenstand der Erfindung sind zunächst Verbindungen der allgemeinen Formel (I) 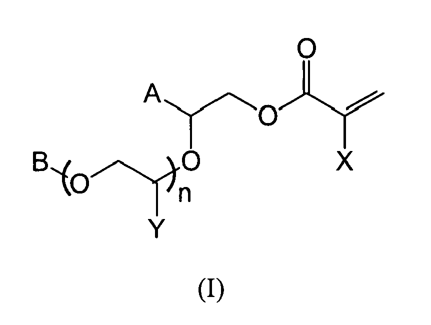 worin bedeuten
- A: einen Alkylrest mit 3 bis 40 C-Atomen
- X und Y: unabhängig voneinander Wasserstoff- oder einen Methylrest
- B: eine Sulfat- oder Phosphatgruppe und
- n: eine Zahl im Bereich von 0 bis 40.

### Zu den Verbindungen (I)

Bei dem Alkylrest A handelt es sich um lineare oder verzweigte, gesättigte oder ungesättigte Alkylgruppen mit 3 bis 40, bevorzugt 10 bis 20, besonders bevorzugt 12 bis 18 C-Atomen. Ganz besonders bevorzugt sind folgende Alkylreste A: Lauryl (C12), Myristyl (C14), Cetyl (C16), Stearyl (C 18), Oleyl (olefinisch ungesättigtes C 18) und iso-Tridecyl.

Bei den erfindungsgemäßen Verbindungen der Formel (I) handelt es sich formal um Veresterungsprodukte der Acrylsäure und/oder Methylacrylsäure.

Der Alkoxylierungsgrad n liegt erfindungsgemäß bei 0 bis 40, bevorzugt bei 1 bis 20, besonders bevorzugt bei 2 bis 10.

Bei der ionischen Gruppe B handelt es sich um eine Sulfat- oder Phosphatgruppe. In einer Ausführungsform liegen die Sulfat- bzw. Phosphatgruppe B der Verbindungen (I) in neutralisierter Form vor. Die Neutralisation der Sulfat- bzw. Phosphatgruppe kann beispielsweise mit Alkali- oder Erdalkalihydroxiden wie Natrium-, Kalium-, Calcium- oder Magnesiumhydroxid oder mit Aminen wie Ammoniak oder Ethanolaminen geschehen. Die Salzform der Verbindungen (I) zeichnet sich durch eine gute Wasserlöslichkeit aus.

Die Verbindungen der Formel (I) sind beispielsweise dadurch zugänglich, daß man handelsübliche alpha-Olefine mittels Ameisensäure und Wasserstoffperoxid epoxidiert, den Epoxidring des erhaltenen Zwischenproduktes 1 anschließend mittels Acrylsäure oder Methacrylsäure öffnet, die OH-Gruppe des erhaltenen Zwischenproduktes 2 gewünschtenfalls alkoxyliert (Umsetzung mit Ethylen- und oder Propylenoxid) and schließlich eine Sulfatierung oder Phosphatierung der terminalen OH-Gruppe durchführt.

### Verwendung der Verbindungen (I)

Die erfindungsgemäß einzusetzenden Verbindungen (I) lassen sich leicht und vollständig zusammen mit anderen, davon verschiedenen olefinisch ungesättigten Monomeren polymerisieren, wobei sie die Bildung einer schaumfreien und homogenen Emulsion fördern.

Ein weiterer Gegenstand der Erfindung betrifft daher die Verwendung der oben genannten Verbindungen (I) als copolymerisierbare Emulgatoren in der Emulsionspolymerisation olefinisch ungesättigter Monomerer.

Die Verbindungen (I) werden im Rahmen der Emulsionspolymerisation vorzugsweise in teilweiser oder vollständig neutralisierter Form eingesetzt ("Salzform" der Sulfat- bzw. Phosphatgruppe). Diese ist leicht zugänglich, indem man die Verbindungen (I) nach üblichen Methoden teilweise oder ganz neutralisiert, beispielsweise mit Alkali- oder Erdalkalihydroxiden wie Natrium-, Kalium-, Calcium- oder Magnesiumhydroxid oder mit Aminen wie Ammoniak oder Ethanolaminen. Die Salzform der Verbindungen (I) zeichnet sich durch eine gute Wasserlöslichkeit aus.

### Verfahren zur Herstellung von Polymeren

Ein weiterer Gegenstand der Erfindung ist ein Verfahren zur Herstellung von Polymeren durch Emulsionspolymerisation olefinisch ungesättigter Monomere, bei dem man als copolymeriserbare Emulgatoren die oben genannten Verbindungen (I) einsetzt.

Das erfindungsgemäße Verfahren unter Einsatz der Verbindungen (I), insbesondere in Salzform, zeichnet sich dadurch aus, dass Polymere mit besonderer Scher- und Elektrolytbeständigkeit sowie niedrigem Koagulatgehalt erhalten werden.
In einer Ausführungsform der Erfindung werden Latices erhalten, die sich ihrerseits zusätzlich durch eine besondere Wasserresistenz sowie Stabilität gegenüber Temperaturschwankungen auszeichnen und bei denen keine Migration des Emulgators in den Film festzustellen ist.
Ein weiterer Vorteil des erfindungsgemäßen Verfahrens besteht ferner darin, dass es praktisch schaumfrei ist und die Bildung flüchtiger organischer Stoffe zuverlässig vermieden wird. Da der Emulgator (I) praktisch quantitativ in das Polymer eingebaut wird, sind mit dessen Verwendung auch keine Probleme hinsichtlich der biologischen Abbaubarkeit verbunden. Die olefinisch ungesättigten Ester (I) zeigen des weiteren praktisch keine Tendenz zur Homopolymerisation.

Es wurde gefunden, daß durch die Verwendung der Verbindungen (I) als Emulgatoren bei der Emulsionspolymerisation Latices zugänglich sind, die gegenüber solchen Latices, die mit vergleichbaren nicht-copolymerisierbaren Emulgatoren hergestellt wurden, verbesserte Eigenschaften in Bezug auf ihre Elektrolytbeständigkeit, ihre Alkaliresistenz oder ihre Viskosität aufweisen (vergleiche hierzu die Beispiele 1 und 2 sowie die Tabelle 1). Die im Beispielteil aufgeführten Beispiele verdeutlichen die positiven Eigenschaften der erfindungsgemäß einzusetzenden Verbindungen (I). Auch Kombinationen von (I) mit typischen Tensiden nicht-ionischer und anionischer Natur sind einsatzfähig und zeigen ebenfalls ein positives Eigenschaftsprofil.

Die erfindungsgemäßen Latices können beispielsweise in der Beschichtungsindustrie eingesetzt werden. Es wurde gefunden, daß Beschichtungen, die mit den erfindungsgemäßen Latices hergestellt wurden, einen höheren Korrosionsschutz gegenüber herkömmlichen Beschichtungen besitzen. Dies wird in den Beispieln 5 und 6 (Vergleichsbeispiel) dargelegt.

### Monomere

Die erfindungsgemäß einzusetzenden olefinisch ungesättigten Ester der allgemeinen Formel (I) eignen sich als Emulgatoren bei der Emulsionspolymerisation von nahezu sämtlichen technisch wichtigen, im wesentlichen wasserunlöslichen Monomeren, vorzugsweise aber (Meth)acryl-, Styrol- und Vinylverbindungen.

Typische Beispiele für diese Monomeren sind Vinylaromaten, z.B. Styrol, Divinylbenzol oder Vinyltoluol, polymerisierbare Olefine und Diolefine wie Propen, Butadien oder Isopren, Ester der Acryl- oder Methacrylsäure mit linearen oder verzweigten Alkoholen mit 1 bis 18 Kohlenstoffatomen, insbesondere von Alkoholen mit 1 bis 8 Kohlenstoffatomen und - besonders bevorzugt - von Methylestern, Ethylestern und Butylestern derselben, Vinylester von Säuren mit 2 bis 12 Kohlenstoffatomen, insbesondere Vinylacetat, Vinylpropionat, Vinyl-2-ethylhexanat und Vinyllaurat, Vinylalkylether mit 1 bis 8 Kohlenstoffatomen aufweisenden Alkylgruppen, Vinylchlorid, Vinylidenchlorid und dergleichen.

Monomere, die ausgewählt sind auf die Gruppe der Alkylacrylate, Styrolacrylate VeoVa-Verbindungen oder Mischungen hieraus, mit oder ohne Zusatz von Acrylsäure oder Methacrylsäure, sind im Rahmen der vorliegenden Erfindung besonders bevorzugt.

Die Monomeren können in Gegenwart der erfindungsgemäß einzusetzenden copolymerisierbaren Emulgatoren (I) homopolymerisiert oder mit anderen der genannten Verbindungen aus der vorstehenden Aufzählung copolymerisiert werden. Weiterhin können Copolymerisationen durchgeführt werden, bei denen bis zu 50 Gew.-% weitere, von den erfindungsgemäßen Verbindungen (I) verschiedene, an sich teilweise oder vollständig wasserlösliche Monomere beteiligt sind, zum Beispiel Acrylnitril, Methacrylnitril, Halbester der Malein- bzw. Fumarsäure mit 1 bis 8 Kohlenstoffatomen, Acrylsäure, Methacrylsäure, Maleinsäure, Fumarsäure, Crotonsäure und/oder Itaconsäure.

In einer Ausführungsform setzt man in dem erfindungsgemäßen Verfahren als Monomere Kombinationen von Styrol/Butylacrylat, Vinylacetat/Butylacrylat oder Styrol/Butadien ein.

### Co-Emulgatoren

Weiterhin ist es auch möglich, die erfindungsgemäß einzusetzenden Verbindungen (I) in Kombination mit bekannten nichtionischen und/oder anionischen Co-Emulgatoren einzusetzen. Dies kann zu Dispersionen mit erhöhter Stabilität, z.B. gegenüber Scherkräften, Temperatureinflüssen und Elektrolyten führen. Die Co-Emulgatoren werden dabei in Mengen von 0,5 bis 5, vorzugsweise 1 bis 3 Gew.-%, bezogen auf die Gesamtheit der eingesetzten Monomere, zugegeben. Dabei ist es möglich, die Co-Emulgatoren zu Beginn der Polymerisation zusammen mit den Emulgatoren vorzulegen oder sie im Verlauf der Polymerisation zuzudosieren. Eine weitere Variante sieht vor, eine Präemulsion unter Verwendung oder Mitverwendung der Co-Emulgatoren herzustellen und diese im Verlauf der Polymerisation zuzudosieren. Es ist auch möglich, zur Nachstabilisierung der unter Verwendung der erfindungsgemäßen Acrylsäure- und/oder Methacrylsäureester erhaltenen Dispersionen diese mit Co-Emulgatoren zu versetzen.

Die erfindungsgemäß einzusetzenden Verbindungen (I) können auch zusammen mit Schutzkolloiden eingesetzt werden. Typische Beispiele für derartige Schutzkolloide sind vollständig oder teilweise verseifte Homo- und/oder Copolymere des Vinylacetats, z.B. teilverseiftes Polyvinylacetat, oder vollständig verseifte Copolymere aus Vinylacetat und Vinylethern. Bevorzugte Copolymere weisen 1 bis 4 Kohlenstoffatome im E-therteil des Polyvinylethers auf. Weitere Schutzkolloide können von Polysacchariden abgeleitet sein. So sind insbesondere Cellusoseether wie Hydroxyethylcellulose, Hydroxypropylcellulose, Carboxymethylcellulose, Methylcellulose, Ethylcellulose oder Cellulose-Mischether geeignet. Weiterhin geeignet sind Polyacrylamid sowie dessen Copolymere mit Acrylsäure, Acrylnitril oder Acrylestern. Auch Kondensationsprodukte aus Naphthalinsulfonsäure und Formaldehyd oder andere wasserlösliche Formaldehydharze, insbesondere Harnstoff-Formaldehyd-Harze, können ver-wendet werden. Schließlich sind Casein, Gelatine, Gummi arabicum sowie natürliche Stärke und substituierte Stärkederivate wie Hydroxyethylstärke geeignete Schutzkolloide.

### Emulsionspolymerisation

In einer Ausführungsform setzt man die Emulgatoren (I) bei der Emulsionspolymerisation in Mengen von 0,1 bis 25 Gew.-% - bezogen auf die Summe der Monomere - ein.

Die unter Verwendung der Verbindungen (I) im ersten Schritt des Verfahrens üblicherweise herzustellenden wäßrigen Dispersionen weisen in der Praxis 15 bis 75 Gew.-% polymerisierte Monomere (Trockenrückstand) in Wasser oder einem Gemisch von Wasser und wasserlöslichen organischen Lösemitteln auf. Bevorzugt ist der Bereich von 20 bis 60 Gew.-% Trockenrückstand; jedoch sind für spezielle Anwendungen auch wäßrige Dispersionen mit weniger als 15 Gew.-% Trockenrückstand herstellbar. Bei den vorgenannten Verfahren zur Emulsionspolymerisation können auch weitere übliche Polymerisationshilfsstoffe eingesetzt werden, insbesondere Initiatoren, z.B. anorganische Peroxidverbindungen wie Kalium- oder Ammoniumpersulfat oder Wasserstoffperoxid; weiterhin organische Peroxidverbindungen oder organische Azoverbindungen, soweit diese für die Emulsionspolymerisation verwendbar sind. Die Initiatoren werden in üblichen Mengen, d.h. von 0,05 bis 2 Gew.-%, vorzugsweise von 0,1 bis 0,5 Gew.-% eingesetzt. Weitere geeignete Hilfsstoffe sind Puffersubstanzen, z.B. Natriumhydrogencarbonat, Natriumpyrophosphat oder Natriumacetat, die in Mengen von bis zu 2 Gew.-% eingesetzt werden können. Auch Beschleuniger wie Formaldehydsulfoxylat können eingesetzt werden. Weiterhin können übliche, bei der Emulsionspolymerisation verwendete Molekulargewichtsregler, z.B. Butenol oder auch organische Thioverbindungen wie Mercaptoethanol, Thioglycolsäure, Octylmercaptan oder tert.-Dodecylmercaptan verwendet werden. Für die Durchführung der Polymerisationsverfahren kommen verschiedene, üblicherweise bei der Emulsionspolymerisation angewandte Methoden in Betracht, z.B. eine Gesamtvorlage aller Reaktanden, ein Monomerenzulauf oder ein Emulsionszulauf. Im allgemeinen wird dazu die Temperatur des Polymerisationsmediums in einem Bereich von 40 bis 100, insbesondere 50 bis 90°C, gehalten. Als pH-Wert wird zweckmäßigerweise ein Bereich zwischen 3 und 9 eingehalten, jedoch ist mit den erfindungsgemäßen Verbindungen auch eine Emulsionspolymerisation bei niedrigeren pH-Werten möglich. Die vorgenannten möglichen Verfahrensvarianten zur Emulsionspolymerisation werden zweckmäßigerweise in kühl- und heizbaren, mit Rührer und Temperaturmeßeinrichtung versehenen Behältern, z.B. in Rührdruckkesseln, durchgeführt. Ebenfalls möglich ist die Verwendung von Rohrschlangenreaktoren oder sogenannten Loop-Reaktoren. Nach Beendigung der Polymerisation wird die Polymerisatdispersion zweckmäßigerweise abgekühlt und über Siebeinrichtungen aus dem Reaktor entfernt. Falls die Reaktionsprodukte als Festprodukte isoliert werden sollten, wird die Polymerisatdispersion zweckmäßigerweise ausgefällt oder sprühgetrocknet. Bevorzugt ist jedoch eine direkte Verwendung der bei der Polymerisation erhaltenen Dispersionen als Bindemittel für Farben, Klebstoffe, Papierstreichmassen und andere Beschichtungsmittel. Weitere Bedingungen für Verfahren zur Emulsionspolymerisation unter Verwendung der erfindungsgemäß einzusetzenden Methacrylsäureester der allgemeinen Formel (I) können von dem Fachmann in üblicher Weise an die jeweiligen Erfordernisse angepaßt oder frei gewählt werden.

### Beispiele

### Eingesetzte Emulgatoren

### C12-Epoxyacryl-10EO-phosphat:

Hierbei handelt es sich um eine Verbindung (I) gemäß der vorliegenden Erfindung. Diese wurde wie folgt hergestellt:
1,2-Dodecen wurde nach einschlägig bekannten Methoden zum Zwischenprodukt 1 epoxidiert.
Sodann wurden 1304,16 g (6,7 mol) dieses Zwischenprodukts 1 auf 60°C erwärmt und mit 3,57 g 4-Methoxyphenol versetzt. Anschließend wurde ein Mischung aus 482,08 g (6,7 mol) Acrylsäure und 17,86 g Triphenylphosphin zudosiert, wobei die Temperatur des Reaktionsgemisches zwischenzeitlich von 60°C auf 90°C erhöht wurde. Nach beendeter Zudosierung wurde solange bei 90°C reagiert, bis die Säurezahl des Reaktionsgemisches unter 3 mg KOH/g lag (Zwischenprodukt 2).
400 g (1,5 mol) des Zwischenproduktes 2 wurden mit 264,30 g (6 mol) Ethylenoxid, 2 g Kalilauge (50%) und 0,13 g Phenothiazin versetzt und mit Stickstoff gespült. Anschließend wurde bei 150 bis 155°C und 4,5 bar Druck zum Zwischenprodukt 3 ethoxyliert.
41,44 g (0,29 mol) Phosphorpentoxid wurden innerhalb einer Stunde und unter starkem Rühren portionsweise in 258,56 g (0,58 mol) des Zwischenprodukts 3 eindosiert. Dabei wurde darauf geachtet, daß die Reaktionstemperatur nicht über 60°C steigt. Nach beendeter Zudosierung wurde noch 2 Stunden lang bei 90°C zum Endprodukt weiterreagiert.

### Disponil FEP 5600:

Hierbei handelt es sich um ein handelsübliches Fettalkoholetherphosphat, erhältlich von der Fa. Cognis.

### Verwendete Testmethoden

Die hergestellten Emulsionen wurden anhand folgender Parameter charakterisiert:

Der **Trockenrückstand** wurde wie folgt bestimmt: 5 Gramm der Emulsion wurden in einen Trockenrückstandsapparat vom Typ 709301 der Fa. Satorius gefüllt und bis zur Gewichtskonstanz getrocknet. Das Ergebnis wird in Gewichtsprozent Trockenrückstand angegeben. In diesem Sinne sind die Angaben in den nachfolgenden Tabellen zu verstehen.

Die **Viskosität** der hergestellten Emulsionen wurde nach Brookfield bei 20 upm und Einsatz von Spindel 1 bestimmt, wobei die Emulsionen als solche eingesetzt wurden. Die Angaben der Viskosität in den nachfolgenden Tabellen erfolgt in der Einheit mPas.

Der **pH-Wert** der hergestellten Emulsionen wurde gemäß DIN 19268 elektrochemisch unter Verwendung einer pH-Elektrode bestimmt.

Der **mittlere Teilchendurchmesser** der hergestellten Emulsionen wurde mittels eines Coulter Nano-Sizers bestimmt. Die Angaben des Teilchendurchmessers in den nachfolgenden Tabellen erfolgt in der Einheit nm (Nanometer).

Der **Gesamt-Koagulat-Gehalt** der hergestellten Emulsionen wurde gravimetrisch nach Abfiltrieren über ein 80 Mikrometer-Filter (Naßkoagulat) bestimmt.
Der derart ermittelte Koagulatgehalt wird als % Koagulat bezogen auf den Feststoffgehalt der Emulsion angegeben. Unter dem Feststoffgehalt der Emulsion ist dabei die eingesetzte Menge der Monomeren zu verstehen.
Der Koagulatgehalt ist für den Fachmann eine wichtige Größe zur Beurteilung der Güte einer durch Emulsionspolymerisation hergestellten Emulsion.

### Herstellung von Latices

### Beispiel 1 (erfindungsgemäß)

In ein Reaktorgefäß wurden 260,37 g destilliertes Wasser, 1,75 g C12-Epoxyacryl-10EO-phosphat, 0,47 Kaliumperoxodisulfat und 40 g einer Prä-Emulsion aus 213,0 g VeoVa 10, 151,5 g Methylmethacrylat, 94,7 g Butylacrylat, 14,2 g Acrylsäure, 1,75 g C12-Epoxyacryl-10EO-phosphat, 1,89 g Kaliumperoxodisulfat und 260,37 g destilliertem Wasser gegeben.. Der Reaktor wurde auf 80°C aufgeheizt. Nach dem Start der Polymerisation wurde die verbleibende Prä-Emulsion innerhalb von 3 Stunden gleichmäßig zudosiert. Nach beendeter Zugabe wurde 1 Stunde lang nachpolymerisiert.

### Beispiel 2 (zum Vergleich)

Wie Beispiel 1, wobei jedoch anstelle des C12-Epoxyacryl-10EO-phosphats dieselbe Menge Disponil FEP 5600 eingesetzt wurde.

### Testergebnisse

Die hergestellten Latices wurden näher charakterisiert. Die Ergebnisse sind Tabelle 1 zu entnehmen.

**Tabelle 1**

| | Latex nach Beispiel 1 | Latex nach Beispiel 2 |
|---|---|---|
| Teilchengröße [nm] | 182 | 116 |
| Viskosität (20°C) [mPas] | 135 | 1225 |
| Elektrolytstabilität | 10% CaCl2 | 1% CaCl2 |

### Beispiel 3 (erfindungsgemäß)

Die Emulsion gemäß Beispiel 1 wurde von 23°C ausgehend innerhalb von 16 Stunden auf -5°C abgekühlt und nach Erreichen dieser Temperatur innerhalb von 8 Stunden wieder auf 23°C erwärmt. Hiernach wurde die Emulsion visuell auf Homogenität geprüft. Dieser Zyklus wurde insgesamt fünfmal durchlaufen, wobei die Minimaltemperatur bei jedem Zyklus um weiter 5°C abgesenkt wurde, d.h. beim zweiten Zyklus wurde bis auf -10°C abgekühlt, beim dritten Zyklus bis auf -15°C, usw.

Die erfindungsgemäße Emulsion gemäß Beispiel 1 war nach fünf Zyklen immer noch homogen, d.h. sie lag als intakte Emulsion vor.

### Beispiel 4 (zum Vergleich)

Das Verfahren nach Beispiel 3 wurde mit der Emulsion gemäß Beispiel 2 wiederholt. Hier zeigte sich, daß die Emulsion bereits nach dem ersten Zyklus eine Phasentrennung aufwies. Das aufgetretene Koagulat war nicht redispergierbar.

## Patentansprüche

1. Verbindungen der allgemeinen Formel (I) 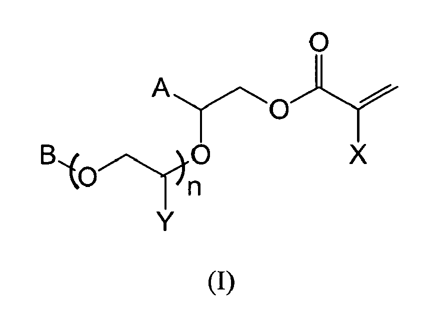 worin bedeuten
A einen Alkylrest mit 3 bis 40 C-Atomen,
X und Y unabhängig voneinander Wasserstoff- oder einen Methylrest,
B eine Sulfat- oder Phosphatgruppe und
n eine Zahl im Bereich von 0 bis 40.

2. Verbindungen gemäß Anspruch 1, wobei die Sulfat- bzw. Phosphatgruppe B in neutralisierter Form vorliegt.

3. Verbindungen gemäß Anspruch 1 oder 2, wobei n eine Zahl im Bereich von 1 bis 20 ist

4. Verfahren zur Herstellung von Polymeren durch Emulsionspolymerisation olefinisch ungesättigter Monomere, bei dem man als copolymeriserbare Emulgatoren die Verbindungen (I) gemäß Anspruch 1 bis 3 einsetzt.

5. Verwendung der Verbindungen (I) gemäß Anspruch 1 bis 3 als copolymerisierbare Emulgatoren in der Emulsionspolymerisation olefinisch ungesättigter Monomerer.
